# EUROPEAN PATENT SPECIFICATION

(11) **EP 1 759 111 B1**
(45) Date of publication and mention of the grant of the patent: **27.10.2010**
(21) Application number: 05746658.3
(22) Date of filing: 24.05.2005
(51) Int. Cl.: F02M 25/07

(54) **AN ARRANGEMENT FOR RECIRCULATION OF EXHAUST GASES OF A SUPER-CHARGED INTERNAL COMBUSTION ENGINE**
ANORDNUNG ZUR RÜCKFÜHRUNG VON ABGASEN EINES AUFGELADENEN VERBRENNUNGSMOTORS
DISPOSITIF DE RECYCLAGE DES GAZ D'ECHAPPEMENT DANS UN MOTEUR A COMBUSTION SURALIMENTE

(30) Priority: 28.05.2004 SE 0401377
(43) Date of publication of application: 07.03.2007
(73) Proprietor: Scania CV AB (publ), 151 87 Södertälje (SE)
(72) Inventor: KARDOS, Zoltan, S-151 35 Södertälje (SE); SÖDERBERG, Pehr, S-151 39 Södertälje (SE); SÖDERBERG, Erik, S-111 29 Stockholm (SE); WIKSTRÖM, Hans, S-121 43 Johanneshov (SE); PETTERSSON, Rickard, S-14451 Rönninge (SE); IVARSSON, Roland, S-15593 Nykvarn (SE)
(86) International application number: PCT/SE2005/000765
(87) International publication number: WO 2005/116438

(56) References cited:
- US-A- 5 607 010
- US-B1- 6 244 256

## Description

### BACKGROUND TO THE INVENTION, AND STATE OF THE ART

The present invention relates to an arrangement for recirculation of exhaust gases of a supercharged combustion engine according to the preamble of claim 1 (see for example US-A-6 244 256).

The technique known as EGR (Exhaust Gas Recirculation) is a known way of leading part of the exhaust gases from a combustion process in a combustion engine back, via a return line, to an inlet line for supply of air to the combustion engine. A mixture of air and exhaust gases is thus supplied via the inlet line to the engine's cylinders in which the combustion takes place. The addition of exhaust gases to the air causes a lower combustion temperature resulting inter alia in a reduced content of nitrogen oxides NOₓ in the exhaust gases. This technique is applied in both Otto engines and diesel engines.

The amount of air which can be supplied to a supercharged combustion engine depends on the pressure of the air but also on the temperature of the air. Supplying the largest possible amount of air to the combustion engine therefore entails cooling the compressed air in a charge air cooler before it is led to the combustion engine. The compressed air is cooled in the charge air cooler by ambient air flowing through the charge air cooler. The compressed air can thus be cooled to a temperature which is only a few degrees above the temperature of the surroundings. In cases where EGR technology is used, the returned exhaust gases also need cooling. This is achieved by means of a so-called EGR cooler. An EGR cooler is usually connected to the combustion engine's cooling system so that the exhaust gases are cooled in the EGR cooler by the circulating coolant in the cooling system. The EGR cooler is thus subject to the limitation that the exhaust gases cannot be cooled to a lower temperature than the temperature of the coolant in the cooling system. The cooled exhaust gases are therefore usually at a higher temperature than the cooled compressed air when they are put into the inlet line to the combustion engine. The mixture of exhaust gases and air being led to the combustion engine will therefore be at a higher temperature than the compressed air led into a supercharged combustion engine which is not provided with recirculation of exhaust gases. The performance of a supercharged combustion engine equipped with EGR is therefore somewhat inferior to that of a supercharged combustion engine not equipped with EGR.

### SUMMARY OF THE INVENTION

The object of the invention is to provide an arrangement which effects recirculation of exhaust gases in a supercharged combustion engine in such a way that the recirculation of exhaust gases does not result in the combustion engine's performance being inferior to that of a similar combustion engine not provided with recirculation of exhaust gases.

This object is achieved with the arrangement of the kind mentioned in the introduction which is characterised by the features indicated in the characterising part of claim 1. This entails the exhaust gases being cooled in an EGR cooler by a coolant which is at a temperature substantially corresponding to the temperature of the surroundings. The exhaust gases can thereby be cooled to a temperature which is just above the temperature of the surroundings. The exhaust gases can thus be brought to a temperature substantially corresponding to the temperature at which the compressed air is after cooling in a conventional charge air cooler. The mixture of exhaust gases and compressed air supplied to the combustion engine is in this case not at a higher temperature than the compressed air supplied to a similar combustion engine not equipped with recirculation of exhaust gases. The performance of a combustion engine with an arrangement according to the present invention can therefore substantially correspond to that of a combustion engine not equipped with EGR.

According to the present invention, said coolant is circulated in a second cooling system which constitutes a separate cooling system relative to the first cooling system. In a conventional EGR cooler, the recirculating exhaust gases are cooled by the coolant in the cooling system which cools a combustion engine. The EGR cooler is thus subject to the limitation that the exhaust gases cannot be cooled to a lower temperature than the temperature of the coolant in the cooling system, which is usually considerably above the temperature of the surroundings. Using such a separate second cooling system which has a suitably dimensioned cooling capacity makes it possible to give the circulating coolant in the cooling system a temperature which substantially corresponds to the temperature of the surroundings when it is led into the EGR cooler. The recirculating exhaust gases can thus likewise be cooled to a temperature which is just above the temperature of the surroundings before they are mixed with the compressed air. The second cooling system may comprise a coolant pump by which the coolant is circulated through the cooling system. There is thus assurance that the coolant in the second cooling system is subjected to well-controlled circulation in the cooling system. The second cooling system comprises a radiator element for cooling the circulating coolant, said radiator element being fitted in a region through which ambient air flows. The combustion engine is used with advantage for powering a vehicle. By suitable positioning of the radiator element in such cases it is possible to achieve a natural flow of ambient air through the radiator element during operation of the vehicle. Alternatively, the second cooling system may comprise a radiator fan by which ambient air is caused to flow through the radiator element.

According to another preferred embodiment of the invention, the arrangement comprises a charge air cooler adapted to cooling the compressed air in the inlet line to the combustion engine. Such a charge air cooler is usually fitted in a vehicle forward of the ordinary radiator in which the coolant which is intended to cool the combustion engine is cooled. The compressed air in the charge air cooler is cooled by ambient air flowing through the charge air cooler. The radiator element and the charge air cooler may be fitted in separate regions through which ambient air flows. Thus the second cooling system may comprise a separate radiator fan which circulates ambient air through the radiator element. Alternatively, the radiator element and the charge air cooler may be fitted in a common region. In such cases a common radiator fan may be used for circulating ambient air through both the charge air cooler and the radiator element

According to another preferred embodiment of the invention, the radiator element and the charge air cooler substantially comprise flat cooling packages which each have a main extent in one plane, whereby the radiator element and the charge air cooler are fitted in a substantially common plane in the common region. With advantage, the radiator element and the charge air cooler are fitted alongside one another in such a common plane which is substantially perpendicular to the direction of flow of the air. In such cases the air led through said common region will be led in parallel through the radiator element and the charge air cooler. This air will thus only pass through the radiator element or through the charge air cooler. There is thus assurance that air at the temperature of the surroundings flows through the radiator element and the charge air cooler. The compressed air in the charge air cooler and the coolant in the radiator element thus provide similar cooling down to a substantially similar temperature. A radiator belonging to the first cooling system may also be fitted in said common region at a location downstream from the radiator element and the charge air cooler in the direction of flow of the air. The vehicle's existing radiator fan may therefore also be used for circulating air through the charge air cooler and the radiator element. In such cases the air will be led first through the radiator element or the charge air cooler before being led through the radiator belonging to the first cooling system and intended for cooling the combustion engine. As the air thus first passes through the cooling element or the charge air cooler, it is at a somewhat higher temperature than the surroundings when it reaches the more rearward-situated radiator. The coolant in the first cooling system, which cools the combustion engine, need nevertheless not be cooled down to the temperature of the surroundings in order to perform an acceptable function.

### BRIEF DESCRIPTION OF THE DRAWINGS

Preferred embodiments of the invention are described below by way of examples with reference to the attached drawings, in which:
- Fig. 1: depicts an arrangement, according to a first embodiment of the invention, for recirculation of exhaust gases in a supercharged diesel engine and
- Fig. 2: depicts an arrangement, according to a second embodiment of the invention, for recirculation of exhaust gases in a supercharged diesel engine.

### DETAILED DESCRIPTION OF PREFERRED EMBODIMENTS OF THE INVENTION

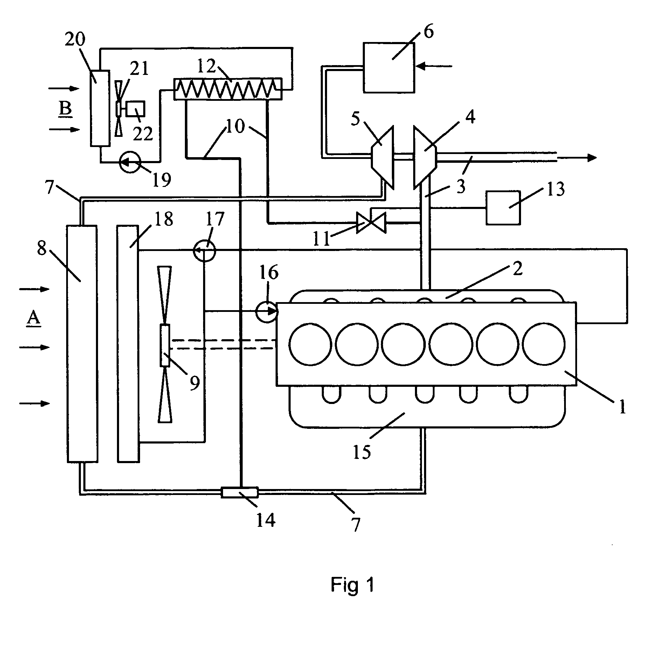

Fig. 1 depicts an arrangement for recirculation of exhaust gases of a supercharged combustion engine. The combustion engine is in this case a diesel engine 1. Such recirculation is usually called EGR (Exhaust Gas Recirculation). Adding exhaust gases to the compressed air which is led to the engine's cylinders lowers the combustion temperature and hence also the content of nitrogen oxides (NOₓ) which are formed during the combustion processes. The diesel engine 1 may be intended to power a heavy vehicle. The exhaust gases from the cylinders of the diesel engine 1 are led via an exhaust manifold 2 to an exhaust line 3. The exhaust gases in the exhaust line 3, which are at above atmospheric pressure, are led to a turbine 4. The turbine 4 is thus provided with driving power which is transmitted, via a connection, to a compressor 5. The compressor 5 compresses air which is led into the inlet line 7 via an air filter 6. A charge air cooler 8 is arranged in the inlet line 7. The purpose of the charge cooler 8 is to cool the compressed air before it is led to the diesel engine 1. The compressed air is cooled in the charge air cooler 8 by ambient air which flows through the charge air cooler 8 from a radiator fan 9. The radiator fan 9 is driven by the diesel engine 1 via a suitable connection.

An arrangement for effecting recirculation of part of the exhaust gases in the exhaust line 3 comprises a return line 10 which extends between the exhaust line 3 and the inlet line 7. The return line 10 comprises an EGR valve 11 by which the exhaust flow in the return line 10 can be shut off as necessary. The EGR valve 11 may also be used for controlling the amount of exhaust gases led from the exhaust line 3 to the inlet line 7 via the return line 10. A control unit 13 is adapted to controlling the EGR valve 11 on the basis of information about the current operating state of the diesel engine 1. The control unit 13 may be a computer unit provided with suitable software. The return line 10 also comprises an EGR cooler 12 for cooling the exhaust gases. In supercharged diesel engines 1, the pressure of the exhaust gases in the exhaust line 3 in certain operating situations is lower than the pressure of the compressed air in the inlet line 7. In such situations it is not possible to mix the exhaust gases in the return line 10 directly with the compressed air in the inlet line 7 without special auxiliary means. To this end it is possible to use, for example, a venturi 14. If the combustion engine is instead a supercharged Otto engine, the exhaust gases in the return line 10 can be led directly into the inlet line 7, since the exhaust gases in the exhaust line 3 of an Otto engine in substantially all operating situations will be at a higher pressure than the compressed air in the inlet line 7. When the exhaust gases have been mixed with the compressed air in the inlet line 7, the mixture is led via a manifold 15 to the respective cylinders of the diesel engine 1.

The diesel engine I is cooled in a conventional way by a first cooling system. The first cooling system comprises a circuit with a coolant which is circulated by a first coolant pump 16. The circuit also comprises a thermostat 17 and a radiator 18 which is fitted in a first region A through which ambient air flows. A radiator fan 9 is intended to provide a flow of air in the first region A through the radiator 18 and the charge air cooler 8. The recirculating exhaust gases in the return line 7 are cooled in the EGR cooler 12 by a second cooling system. The second cooling system likewise comprises a circuit with a circulating coolant. The coolant is circulated in the circuit by a second coolant pump 19. The cooling system also comprises a radiator element 20 fitted in a second region B through which ambient air flows from a second radiator fan 21. The second radiator fan 21 is driven by an electric motor 22.

During operation of the diesel engine 1, the exhaust gases in the exhaust line 3 drive a turbine 4 before they are led out to the surroundings. The turbine 4 is thus provided with driving power which drives a compressor 5. The compressor 5 compresses air which is led into the inlet line 7 via the air filter 6. The compressed air is cooled in the charge air cooler 8 by ambient air flowing through the charge air cooler 8. The compressed air in the charge air cooler 8 is thus cooled to a temperature which exceeds the temperature of the surroundings by only a few degrees. In most operating states of the diesel engine 1, the control unit 13 keeps the EGR valve 11 open so that part of the exhaust gases in the exhaust line 3 is led into the return line 10. The exhaust gases in the exhaust line 3 are usually at a temperature of about 600-700°C. When the exhaust gases in the return line 10 reach the EGR cooler 12, they undergo cooling by the second cooling system. The second cooling system contains a circulating coolant which is cooled by ambient air in the radiator element 20. By suitable dimensioning of the radiator element 20 it is possible in such cases for the coolant to be cooled to a temperature substantially corresponding to the temperature of the surroundings. Alternatively, the coolant flow in the second cooling system may be regulated so that the coolant is cooled to a temperature substantially corresponding to the temperature of the surroundings after passing through the radiator element 20. To achieve such cooling of the coolant, the flow through the radiator element 20 needs to be relatively small. By suitable design of the EGR cooler 12, it is possible for the coolant, which is thus at a temperature substantially corresponding to the temperature of the surroundings when it is led into the EGR cooler 12, to cool the exhaust gases in the EGR cooler 12 to a temperature which exceeds the temperature of the surroundings by only a few degrees. The exhaust gases in the return line 10 thus undergo cooling to substantially the same temperature level as the compressed air in the charge air cooler 8.

In supercharged diesel engines 1 in certain operating situations the pressure of the exhaust gases in the exhaust line 3 will thus be lower than the pressure of the compressed air in the inlet line 7. The venturi 14 can be used to reduce the static pressure of the air in the inlet line 7 locally, at the connection to the return line 10, so that the exhaust gases can be led into and mixed with the compressed air in the inlet line 7. The mixture of exhaust gases and compressed air is thereafter led via the manifold 15 to the respective cylinders of the diesel engine 1. A diesel engine 1 equipped with EGR can, by such cooling of the recirculating exhaust gases in the EGR cooler 12, provide the recirculating exhaust gases with a temperature which substantially corresponds to the temperature of the compressed air in the inlet line 7 after cooling in the charge air cooler 8. The mixture of exhaust gases and compressed air led to the diesel engine 1 is thus provided with a temperature substantially corresponding to the temperature of the compressed air led to a diesel engine without EGR. With the present invention, a diesel engine equipped with EGR can therefore present performance substantially corresponding to that of a diesel engine not equipped with EGR.

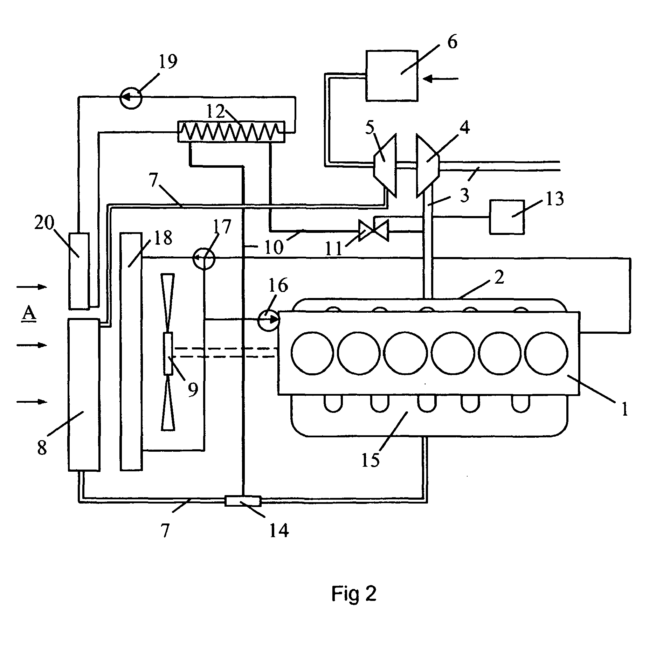

Fig. 2 depicts an alternative arrangement for recirculation of exhaust gases of a diesel engine 1. In this case the radiator element 20 belonging to the second cooling system is situated in the same region A through which air flows as the charge air cooler 8 and the radiator 18. The first radiator fan 9 can therefore also be used for leading air through the radiator element 20. In this case there is thus no need to use a second radiator fan 21. The radiator element 20 and the charge air cooler 8 substantially comprise flat cooling packages which each have a main extent in one plane. In this case the radiator element 20 and the charge air cooler 8 are fitted alongside one another in a substantially common plane which is substantially perpendicular to the direction of flow of the air in the first region A. The air is here led in parallel through the radiator element 20 and the charge air cooler 8. There is thus assurance that air at the temperature of the surroundings flows through both the radiator element 20 and the charge air cooler 8. The compressed air in the charge air cooler 8 and the coolant in the radiator element 20 are thus subjected to cooling to a temperature substantially corresponding to the temperature of the surroundings. In this case the radiator 18 belonging to the first cooling system is fitted at a location downstream from the radiator element 20 and the charge air cooler 8 in the direction of flow of the air. The air is thus led first through the radiator element 20 or the charge air cooler 8 before it is led through the radiator 18. The air reaching the radiator 18 will thus be at a somewhat higher temperature than the surroundings. However, this air is at a temperature which is usually perfectly sufficient for cooling the coolant in the radiator 18 when there is no need for the coolant in the radiator 18 to be cooled down to the temperature of the surroundings.

The invention is in no way limited to the embodiments illustrated in the drawings but may be varied freely within the scopes of the claims.

## Claims

1. An arrangement for recirculation of exhaust gases of a supercharged combustion engine (1) which is cooled by a first cooling system, whereby the arrangement comprises an exhaust line (3) intended to lead exhaust gases out from the combustion engine (1), an inlet line (7) intended to lead air at above atmospheric pressure to the combustion engine (1), a return line (10) which connects the exhaust line (3) to the inlet line (7) so that via the return line (10) it is possible to recirculate exhaust gases from the exhaust line (3) to the inlet line (7), and an EGR cooler (12) in which the recirculating exhaust gases in the return line (10) are cooled by a coolant circulated in a second cooling system which constitutes a separate cooling system relative to the first cooling system before they are mixed with the air in the inlet line (7), **characterised in that** the exhaust gases in the EGR cooler (12) are cooled by a circulating coolant which is adapted to being at a temperature substantially corresponding to the temperature of the surroundings when it is led into the EGR cooler (12) and that the second cooling system comprises a radiator element (20) for cooling the circulating coolant, said radiator element (20) being fitted in a region through which ambient air at a temperature of the surroundings flows.

2. An arrangement according to claim 1, **characterised in that** the second cooling system comprises a coolant pump (19) by which the coolant is circulated through the cooling system.

3. An arrangement according to claim 1 or 2, **characterised in that** the second cooling system comprises a radiator fan (21) by which ambient air is caused to flow though the radiator element (20).

4. An arrangement according to claim 1, **characterised in that** the arrangement comprises a charge air cooler (8) adapted to cooling the compressed air in the inlet line (7) to the combustion engine (1).

5. An arrangement according to claim 4, **characterised in that** the radiator element (20) and the charge air cooler (8) are fitted in separate regions (A, B) through which ambient air flows.

6. An arrangement according to claim 5, **characterised in that** the radiator element (20) and the charge air cooler (8) are fitted in a common region (A) through which ambient air flows.

7. An arrangement according to claim 6, **characterised in that** the radiator element (20) and the charge air cooler (8) substantially comprise flat cooling packages which each have a main extent in one plane, the radiator element (20) and the charge air cooler (8) being fitted in a substantially common plane in the common region (A).

8. An arrangement according to claim 7, **characterised in that** a radiator (18) belonging to the first cooling system is also fitted in said common region (A) at a location downstream from the radiator element (20) and the charge air cooler (8) in the direction of flow of the air.

## Patentansprüche

1. Anordnung zur Rückführung von Abgasen in einem aufgeladenen Verbrennungsmotor (1), der durch ein erstes Kühlsystem gekühlt wird, wobei die Anordnung umfasst:
eine Abgasleitung (3) zum Herausführen von Abgasen aus dem Verbrennungsmotor (1),
eine Zuführleitung (7) zum Zuführen von Luft über atmosphärischen Druck zu dem Verbrennungsmotor (1),
eine Rückführleitung (10), die die Abgasleitung (3) mit der Zuführleitung (7) verbindet, so dass es durch die Rückführleitung (10) möglich ist, Abgase von der Abgasleitung (3) der Zuführleitung (7) zuzuführen, und
einen AGR-Kühler (12), in dem die zugeführten Abgase in der Rückführleitung (10) durch ein in einem zweiten Kühlsystem, welches in Bezug auf das erste Kühlsystem ein separates Kühlsystem bildet, zirkulierendes Kühlmittel gekühlt werden, bevor sie mit der Luft in der Zuführleitung (7) gemischt werden,
**dadurch gekennzeichnet,**
**dass** die Abgase in dem AGR-Kühler (12) durch ein zirkulierendes Kühlmittel, das dazu ausgebildet ist, eine Temperatur im Wesentlichen entsprechend der Umgebungstemperatur aufzuweisen, wenn es dem AGR-Kühler (12) zugeführt wird, gekühlt werden, und dass das zweite Kühlsystem ein Kühlelement (20) zum Kühlen des zirkulierenden Kühlmittels umfasst, wobei das Kühlelement (20) in einem von Umgebungsluft mit Umgebungstemperatur durchströmten Bereich angebracht ist.

2. Anordnung nach Anspruch 1,
**dadurch gekennzeichnet, dass** das zweite Kühlsystem eine Kühlmittelpumpe (19) umfasst, durch welche das Kühlmittel durch das Kühlsystem zirkuliert wird.

3. Anordnung nach Anspruch 1 oder 2,
**dadurch gekennzeichnet, dass** das zweite Kühlsystem ein Kühlgebläse (21) umfasst, durch welches Umgebungsluft dazu veranlasst wird, das Kühlelement (20) zu durchströmen.

4. Anordnung nach Anspruch 1,
**dadurch gekennzeichnet, dass** die Anordnung einen Ladeluftkühler (8) umfasst, der dazu ausgebildet ist, die verdichtete Luft in der Zuführleitung (7) zu dem Verbrennungsmotor (1) zu kühlen.

5. Anordnung nach Anspruch 4,
**dadurch gekennzeichnet, dass** das Kühlelement (20) und der Ladeluftkühler (8) in von Umgebungsluft durchströmten, voneinander getrennten Bereichen (A, B) angebracht sind.

6. Anordnung nach Anspruch 5,
**dadurch gekennzeichnet, dass** das Kühlelement (20) und der Ladeluftkühler (8) in einem von Umgebungsluft durchströmten, gemeinsamen Bereich (A) angebracht sind.

7. Anordnung nach Anspruch 6,
**dadurch gekennzeichnet, dass** das Kühlelement (20) und der Ladeluftkühler (8) im Wesentlichen flache Kühlpakete umfassen, wobei jedes eine Hauptausdehnung in einer Ebene aufweist, wobei das Kühlelement (20) und der Ladeluftkühler (8) in einem im Wesentlichen gemeinsamen Bereich (A) angebracht sind.

8. Anordnung nach Anspruch 7,
**dadurch gekennzeichnet, dass** außerdem ein zu dem ersten Kühlsystem gehörender Kühler (18) in dem gemeinsamen Bereich (A) an einer dem Kühlelement (20) und dem Ladeluftkühler (8) in Durchströmungsrichtung der Luft nachgelagerten Position angebracht ist.

## Revendications

1. Agencement pour la recirculation des gaz d'échappement d'un moteur à combustion suralimenté (1) qui est refroidi par un premier système de refroidissement, lequel agencement comprend une conduite d'échappement (3) destinée à conduire les gaz d'échappement hors du moteur à combustion (1), une conduite d'entrée (7) destinée à conduire de l'air à une pression supérieure à la pression atmosphérique jusqu'au moteur à combustion (1), une conduite de retour (10) qui raccorde la conduite d'échappement (3) à la conduite d'entrée (7), de telle sorte qu'il soit possible de faire recirculer les gaz d'échappement de la conduite d'échappement (3) vers la conduite d'entrée (7), via la conduite de retour (10), et un refroidisseur EGR (12) dans lequel les gaz d'échappement en recirculation dans la conduite de retour (10) sont refroidis par un liquide de refroidissement mis en circulation dans un deuxième système de refroidissement, qui constitue un système de refroidissement distinct du premier système de refroidissement, avant qu'ils soient mélangés à l'air se trouvant dans la conduite d'entrée (7), **caractérisé en ce que** les gaz d'échappement présents dans le refroidisseur EGR (12) sont refroidis par un liquide de refroidissement en circulation qui est adapté pour être à une température correspondant essentiellement à la température de l'environnement lorsqu'il est introduit dans le refroidisseur EGR (12), et **en ce que** le deuxième système de refroidissement comprend un élément radiateur (20) pour le refroidissement du liquide de refroidissement en circulation, ledit élément radiateur (20) étant monté dans une région à travers laquelle s'écoule l'air ambiant, à une température de l'environnement.

2. Agencement selon la revendication 1, **caractérisé en ce que** le deuxième système de refroidissement comprend une pompe à liquide de refroidissement (19) par laquelle le liquide de refroidissement est mis en circulation à travers le système de refroidissement.

3. Agencement selon la revendication 1 ou 2, **caractérisé en ce que** le deuxième système de refroidissement comprend un ventilateur de radiateur (21) par lequel l'air ambiant est entraîné à s'écouler à travers l'élément radiateur (20).

4. Agencement selon la revendication 1, **caractérisé en ce que** l'agencement comprend un refroidisseur d'air de suralimentation (8) adapté pour refroidir l'air comprimé dans la conduite d'entrée (7) menant au moteur à combustion (1).

5. Agencement selon la revendication 4, **caractérisé en ce que** l'élément radiateur (20) et le refroidisseur d'air de suralimentation (8) sont montés dans des régions distinctes (A, B) à travers lesquelles s'écoule l'air ambiant.

6. Agencement selon la revendication 5, **caractérisé en ce que** l'élément radiateur (20) et le refroidisseur d'air de suralimentation (8) sont montés dans une région commune (A) à travers laquelle s'écoule l'air ambiant.

7. Agencement selon la revendication 6, **caractérisé en ce que** l'élément radiateur (20) et le refroidisseur d'air de suralimentation (8) comprennent essentiellement des ensembles de refroidissement plats qui ont chacun une étendue principale dans un seul plan, l'élément radiateur (20) et le refroidisseur d'air de suralimentation (8) étant montés dans un plan essentiellement commun dans la région commune (A).

8. Agencement selon la revendication 7, **caractérisé en ce qu'**un radiateur (18) appartenant au premier système de refroidissement est également monté dans ladite région commune (A), à une position située en aval de l'élément radiateur (20) et du refroidisseur d'air de suralimentation (8) dans la direction d'écoulement de l'air.
